# EUROPÄISCHE PATENTSCHRIFT

(11) **EP 1 615 798 B1**
(45) Veröffentlichungstag und Bekanntmachung des Hinweises auf die Patenterteilung: **22.06.2016**
(21) Anmeldenummer: 04720879.8
(22) Anmeldetag: 16.03.2004
(51) Int. Cl.: B60N 2/48

(54) **ARRETIERVORRICHTUNG UND KOPFSTÜTZE**
LOCKING DEVICE AND HEADREST
DISPOSITIF DE BLOCAGE ET APPUIE-TETE

(30) Priorität: 20.03.2003 DE 10312517
(43) Veröffentlichungstag der Anmeldung: 18.01.2006
(73) Patentinhaber: Johnson Controls GmbH, 51399 Burscheid (DE)
(72) Erfinder: METZ, Daniel, F-67000 Strasbourg (FR); NAVARRO, Daniel, F-67500 Haguenau (FR); JALLON, Bruno, F-67210 Valff (FR); FRÖSE, Ernst-Otto, 42699 Solingen (DE)
(74) Vertreter: Wolff, Felix
(86) Internationale Anmeldenummer: PCT/EP2004/002701
(87) Internationale Veröffentlichungsnummer: WO 2004/082987

(56) Entgegenhaltungen:
- EP-A- 0 916 549
- DE-U- 29 613 073
- US-A- 3 563 602
- US-A- 4 671 573

## Beschreibung

Die Erfindung betrifft eine Arretiervorrichtung nach dem Oberbegriff des Anspruchs 1. Insbesondere für Kraftfahrzeuge werden Kopfstützen verwendet, die einem Benutzer des Fahrzeugs einen erhöhten Komfort und eine größere Sicherheit gegen mögliche Gefahrenquellen, beispielsweise bei Unfällen, durch eine Abstütz- bzw. Haltefunktion von Körperteilen, insbesondere des Kopfes, bieten. Solche Kopfstützen sind in der Regel einstellbar vorgesehen, um beispielsweise an unterschiedlich große Benutzer anpassbar zu sein. Zur Einstellung der Kopfstützen sind diese mechanisch in einer Mehrzahl von Positionen arretierbar. Die Einstellung der Kopfstützen soll leicht, einfach und mit geringem Kraftaufwand möglich sein. Gleichzeitig soll jedoch bei einer einmal eingestellten bzw. arretierten Kopfstütze eine möglichst gute Arretierung gegen Kräfte gewährleistet sein, die potenziell die Kopfstütze aus der eingestellten Position wegbewegen. Solche Kopfstützen und die Einzelteile, aus denen sie bestehen, sollen weiterhin einfach und kostengünstig herstellbar und zusammenbaubar sein, so dass die Produktion solcher Kopfstützen einfach, schnell und kostengünstig durchführbar ist.

Beispielsweise aus der europäischen Patentschrift EP 0864461 B1 ist eine Kopfstütze für Kraftfahrzeugsitze mit einer schnellen Höhenverstellung bekannt. Hierbei sind zwei Drahtfedern vorgesehen, die von wenigstens einer Betätigungsstange verbogen werden können, so dass die durch die beiden Drahtfedern in ihrer Normalstellung bewirkte Arretierung aufgehoben wird. Bei einem solchen Aufbau einer Kopfstütze ist es jedoch nachteilig vorgesehen, zwei separate Federn zu verwenden. Weiterhin werden spezielle C-förmige Federn verwendet, die nur vergleichsweise zeitaufwendig, in vergleichsweise komplizierter Art und Weise und mit vergleichsweise großer Kraftausübung montierbar sind. Weiterhin ist es so, dass die zwei verwendeten Federn beispielsweise durch Herstellungsschwankungen eine unterschiedliche Arretierungswirkung haben. Dies hat wegen der Verwendung von zwei separaten Federn an zwei separaten Haltestangen die Wirkung, dass die Stütze möglicherweise an den unterschiedlichen Haltestangen in unterschiedlichen Verstellpositionen, d.h. beispielsweise "schräg", positioniert sein kann, was zu nachteiligen Folgen, insbesondere im Hinblick auf den Insassenschutz in Kraftfahrzeugen bei Gefahrensituationen führen kann.

Eine Arretiervorrichtung nach dem Oberbegriff des Anspruchs 1 ist z.B. aus der US 4 671 573 A bekannt. Eine weitere Arretiervorrichtung ist aus der DE 296 13 073 U1 bekannt.

Der Erfindung liegt daher die Aufgabe zugrunde, eine Arretiervorrichtung zu schaffen, bei der die bei den aus dem Stand der Technik bekannten Arretiervorrichtungen auftretenden Nachteile vermieden werden.

Diese Aufgabe wird erfindungsgemäß durch eine Arretiervorrichtung nach Anspruch 1 gelöst. In einer bevorzugten Ausführungsform der Arretiervorrichtung ist das Federmittel als eine einstückig vorgesehene Feder vorgesehen. In einer weiteren bevorzugten Ausführungsform der Arretiervorrichtung ist das Federmittel als eine länglich sich im wesentlichen zwischen beiden Haltestangen erstreckende Feder vorgesehen sind. In einer weiteren bevorzugten Ausführungsform der Arretiervorrichtung umfasst das Federmittel wenigstens ein Mittelteil und Endteile. Solche erfindungsgemäßen Arretiervorrichtungen haben den Vorteil, dass das Federmittel eine gleichmäßige Arretierungswirkung auf beide Haltestangen aufweist.

In einer weiter bevorzugten Ausführungsform der erfindungsgemäßen Arretiervorrichtung werden die Federmittel durch die Bewegung der Betätigungsbereiche elastisch verformt. In einer weiter bevorzugten Ausführungsform der erfindungsgemäßen Arretiervorrichtung weist die Arretiervorrichtung einen Lagerpunkt auf, wobei der Lagerpunkt bei der Bewegung der Betätigungsbereiche eine Bewegung eines Zentralbereichs des Federmittels verhindert. Solche erfindungsgemäßen Arretiervorrichtungen haben den Vorteil, dass sie in sehr einfacher und robuster Weise herstellbar und montierbar ist.

Ein weiterer Gegenstand der vorliegenden Erfindung ist eine Kopfstütze, die insbesondere in einem Kraftfahrzeug verwendet wird. Die Kopfstütze ist dabei erfindungsgemäß mit einer erfindungsgemäßen Arretiervorrichtung fest verbunden. Insbesondere ist durch die Gestaltung der erfindungsgemäßen Kopfstütze die erfindungsgemäße Arretiervorrichtung von außerhalb der Kopfstütze gar nicht oder höchstens teilweise, beispielsweise durch eine Betätigungseinrichtung, sichtbar. Die Kopfstütze weist dabei insbesondere einen Rahmen auf, der Führungselemente für Haltestangen aufweist bzw. mit diesen verbunden ist. Die Haltestangen ragen insbesondere aus der oberen Begrenzungsfläche einer Rückenlehne eines Sitzes eines Kraftfahrzeugs heraus, so dass bei in der Regel im wesentlichen senkrechter oder leicht gegenüber der Senkrechten geneigter Einstellung der Rückenlehne die Haltestangen im wesentlichen senkrecht oder ebenfalls leicht geneigt gegenüber der Senkrechten stehen. Damit ist die Kopfstütze erfindungsgemäß bei im wesentlichen senkrechter Erstreckung der Haltestangen höhenverstellbar.

Die Erfindung wird nachfolgend anhand eines in der Zeichnung dargestellten Ausführungsbeispiels näher erläutert. Es zeigen
Figur 1 eine erfindungsgemäße Kopfstütze mit Haltestangen und einer angedeuteten erfindungsgemäßen Arretiervorrichtung
Figur 2 einen Teil einer erfindungsgemäßen Kopfstütze mit angedeuteter Arretiervorrichtung,
Figur 3 eine Explosionszeichnung von Einzelteilen der erfindungsgemäßen Kopfstütze und insbesondere der erfindungsgemäßen Arretiervorrichtung,
Figur 4 eine Draufsicht in Richtung der Haltestangen der erfindungsgemäßen Arretiervorrichtung, wobei sich die Federmittel in ihrer Arretierposition befinden und
Figur 5 eine Draufsicht in Richtung der Haltestangen der erfindungsgemäßen Arretiervorrichtung, wobei sich die Federmittel in ihrer Löseposition befinden.

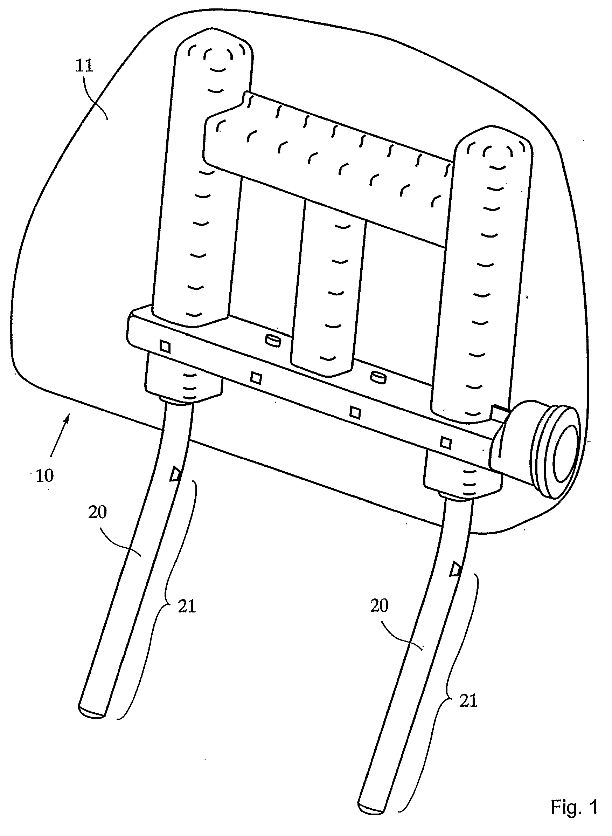

In Figur 1 ist eine erfindungsgemäße Kopfstütze 10 mit Haltestangen 20 und einer angedeuteten erfindungsgemäßen Arretiervorrichtung, die jedoch nicht mit einem Bezugszeichen bezeichnet ist, dargestellt. Die Haltestangen 20 sind dabei mit ihrem unteren Teil 21 insbesondere in einer nicht dargestellten Rückenlehne eines Sitzes eines Kraftfahrzeugs befestigt. Die Kopfstütze 10 weist erfindungsgemäß in aus dem Stand der Technik bekannter Weise ein vergleichsweise weiches und mit dem Bezugszeichen 11 bezeichnetes Material auf, das den größten Teil des Volumens der Kopfstütze 10 ausmacht und zur Lagerung und Stabilisierung insbesondere des Kopfes eines Benutzers der Kopfstütze dient.

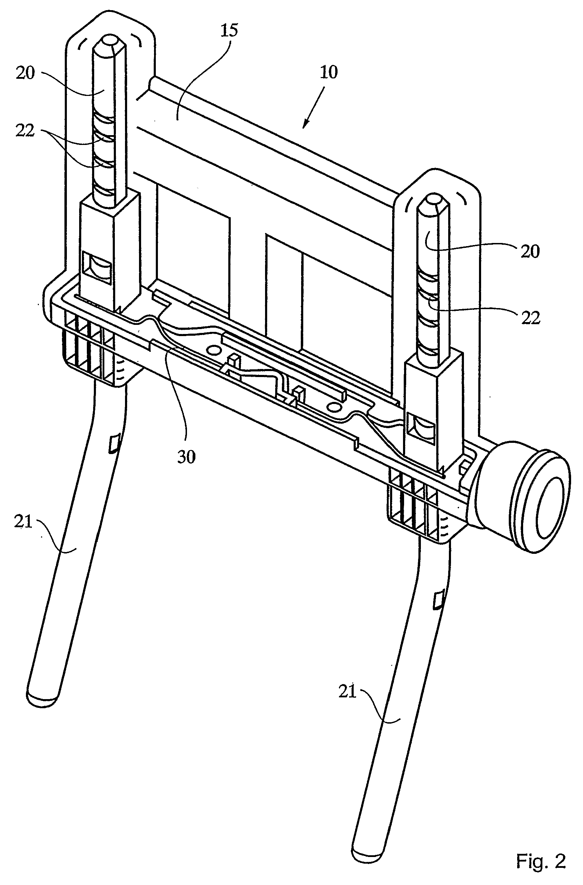

In Figur 2 ist ein Teil einer erfindungsgemäßen Kopfstütze 10 mit angedeuteter Arretiervorrichtung dargestellt. Die Kopfstütze 10 umfasst dabei insbesondere einen ebenfalls aus dem Stand der Technik bekannten Rahmen 15, der der Kopfstütze in sich mechanischen Halt verleiht. In Figur 2 sind weiterhin die Haltestangen 20, deren Ausnehmungen 22 sowie deren untere Teile 21 dargestellt. Die Ausnehmungen 22 sind dabei erfindungsgemäß insbesondere als Kerben 22 vorgesehen. Weiterhin sind in Figur 2 die Federmittel 30 dargestellt. Die Federmittel 30 sind dabei insbesondere als eine länglich sich zwischen den Haltestangen 20 erstreckende Feder 30 vorgesehen. In einer bevorzugten Ausführungsform der Erfindung ist die Feder 30 insbesondere einstückig mittels Federdraht vorgesehen. In einer anderen bevorzugten Ausführungsform der Erfindung ist die Feder 30 in einem mittleren Abschnitt, der durch ein Mittelteil gebildet wird, als Kunststoffteil vorgesehen und in ihren Endabschnitten als metallenes Endteil bzw. als eine Mehrzahl von metallenen Endteilen vorgesehen.

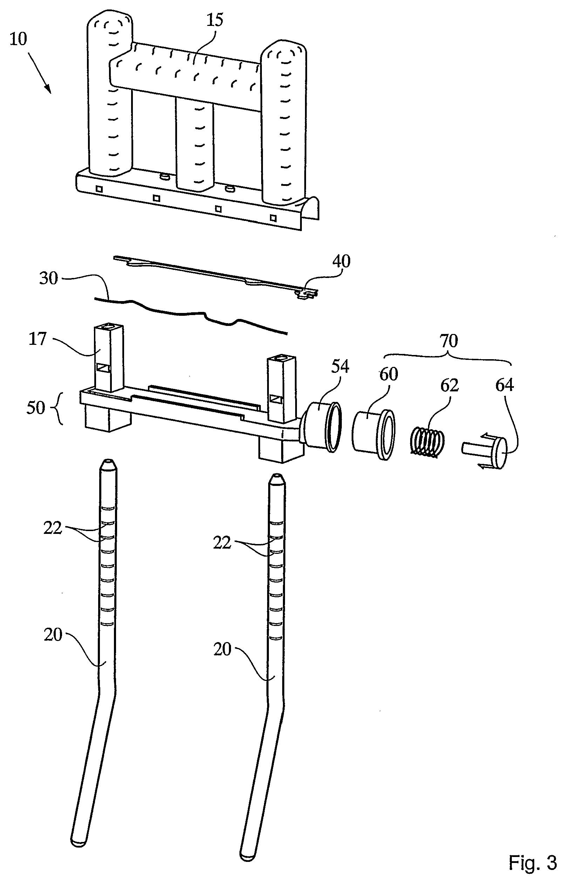

In Figur 3 ist eine Explosionszeichnung von Einzelteilen der erfindungsgemäßen Kopfstütze 10 und insbesondere der erfindungsgemäßen Arretiervorrichtung dargestellt. Die Kopfstütze 10 umfasst den Rahmen 15 und Führungen 17, in denen die Haltestangen 20 geführt werden. Die Arretiervorrichtung weist erfindungsgemäß ein Trägerteil 50 auf, das die zur Arretierung der Arretiervorrichtung relativ zu den Haltestangen 20 erforderlichen Bauteile trägt und zumindest teilweise mechanisch fixiert. Das Trägerteil 50 ist erfindungsgemäß insbesondere mit den Führungen 17 verbunden und einstückig mit diesen vorgesehen, beispielsweise als Kunststoff- oder Metallspritzgussteil. Auf bzw. in das Trägerteil 50 wird die Feder 30 und ein Schiebeelement 40 eingelegt, wobei sowohl die Feder 30 als auch das Schiebeelement 40 in Grenzen mechanisch bewegbar in bzw. auf dem Trägerteil 50 vorgesehen sind. Das Trägerteil 50 weist - in Figur 3 einstückig verbunden - eine Aufnahme 54 für eine Betätigungseinrichtung 70 auf. Eine nicht dargestellte und nicht einstückig mit dem Trägerteil 50 vorgesehene Aufnahme 54 ist jedoch erfindungsgemäß gleichfalls möglich. Die Betätigungseinrichtung 70 ist dabei erfindungsgemäß insbesondere mittels einer Betätigungsführung 60, einer Rückstellfeder 62 und eines Betätigungsknopfes 64 realisiert. Hierbei ist der Betätigungsknopf 64 mechanisch mit dem Schiebeelement 40, insbesondere mittels einer Rastverbindung, verbunden und einem in Figur 3 nicht dargestellten Benutzer der Arretiervorrichtung von außerhalb der Kopfstütze 10 zugänglich. Eine andere Ausführung der Betätigungseinrichtung 70 und eine andere Anbindung des Schiebeelements 40 mit einer dem Benutzer der Arretiervorrichtung zugänglichen Komponente der Betätigungsvorrichtung 70 ist jedoch erfindungsgemäß ebenfalls möglich.

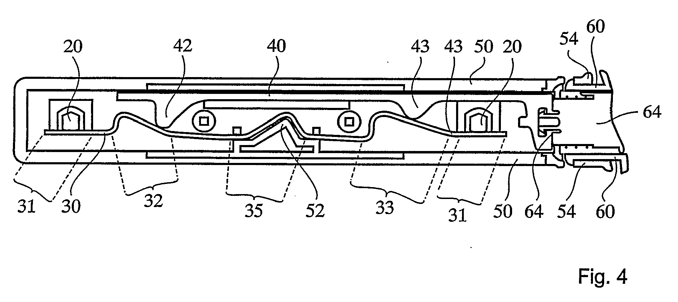

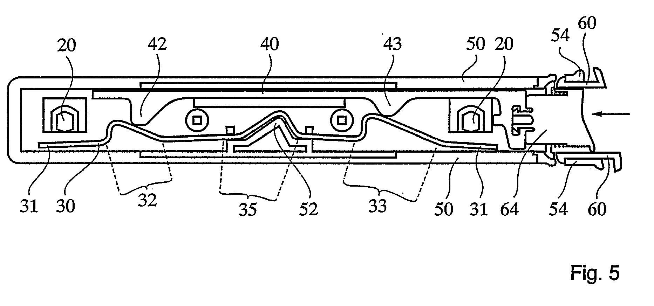

In Figur 4 ist eine Draufsicht in Richtung der Haltestangen 20 der erfindungsgemäßen Arretiervorrichtung dargestellt, wobei sich die Federmittel 30 in ihrer Arretierposition befinden, und in Figur 5 ist eine Draufsicht in Richtung der Haltestangen 20 der erfindungsgemäßen Arretiervorrichtung dargestellt, wobei sich die Federmittel 30 in ihrer Löseposition befinden. Die Arretierposition der Feder 30 ist dadurch gekennzeichnet, dass arretierende Bereiche 31 der Feder 30 an den Haltestangen 20 anliegen. Das Schiebeelement 40 ist dabei in einer ersten Position eingestellt. Diese Position wird erfindungsgemäß insbesondere durch die Federwirkung der in den Figuren 4 und 5 der Einfachheit halber nicht dargestellten Rückstellfeder 62 der Betätigungsvorrichtung 70 auf den Betätigungsknopf 64 und damit auf das Schiebeelement 40 bewirkt. Das Schiebeelement 40 weist erfindungsgemäß Vorsprünge 42, 43 auf, die bei einer Bewegung des Schiebelements 40 zu einer Bewegung der Feder 30 führen können. Die in Figur 4 dargestellte erste Position des Schiebeelement 40 ist dabei dadurch gekennzeichnet, dass die Vorsprünge 42, 43 höchstens an der Feder 30 anliegen, nicht jedoch eine Kraft auf die Feder ausüben. Die Ausübung einer solchen Kraft würde die Arretierungswirkung der Feder 30 auf die Haltestangen 20 verschlechtern. Die arretierenden Bereiche 31 sind im dargestellten Ausführungsbeispiel insbesondere an den beiden Enden der sich länglich erstreckenden Feder 30 vorgesehen. Die Arretierung der Haltestangen 20 relativ zu der Arretiervorrichtung bzw. relativ zur Kopfstütze 10 wird dabei dadurch bewirkt, dass die arretierenden Bereiche 31 der Feder 30 in die in den Figuren 4 und 5 nicht dargestellten Ausnehmungen 22 der Haltestangen 20 eingreifen. Hierbei ist es erfindungsgemäß sowohl vorgesehen, dass die Feder 30 in ihrer Arretierposition bereits "vorgespannt" ist und damit eine Kraftwirkung der Feder 30 auf die Haltestangen 20 vorgesehen ist. Diese Kraftwirkung der Feder 30 wird erfindungsgemäß insbesondere durch einen Lagerpunkt 52 bewirkt, der auf dem Trägerteil 50 vorgesehen ist. Hierbei übt das Trägerteil 50 mittels des Lagerpunktes 52 eine Kraftwirkung auf die Feder 30 insbesondere in einem Zentralbereich 35 der Feder 30 aus. Hierdurch wird eine elastische Verbiegung der Feder 30 insbesondere in deren Zentralbereich 35 und damit eine gleichartige Kraftausübung auf beide Haltestangen 20 bzw. deren Ausnehmungen 22 erzielt. Der Zentralbereich 35 der Feder 30 ist erfindungsgemäß insbesondere etwa in der Mitte zwischen den Haltestangen 20 vorgesehen, was jedoch erfindungsgemäß nicht zwangsläufig der Fall ist.

Bei einer alternativen Ausführungsform der Erfindung liegt die Feder 30 lediglich an den beiden Haltestangen 20 und dem Lagerpunkt 52 an. Durch die mechanische Fixierung der Feder 30 am Lagerpunkt 52 - erfindungsgemäß insbesondere im Zentralbereich 35 - ist bei der alternativen Ausführungsform bereits eine Arretierung der Arretiervorrichtung relativ zu den Haltestangen 20 vorgesehen. Es ist klar, dass bei einer Arretierung ohne Kraftwirkung in der Arretierposition der Feder 30 die Montierbarkeit der Feder 30 erleichtert ist, dies jedoch mit einer geringfügig weniger guten Arretierung verbunden ist.

Die in Figur 5 dargestellte Löseposition der Feder 30 ist dadurch gekennzeichnet, dass die arretierenden Bereiche 31 der Feder 30 die Haltestangen 20 und damit die Ausnehmungen 22 freigeben, d.h. die arretierenden Bereiche 31 der Feder 30 von den Haltestangen 20 beabstandet vorgesehen sind. Dadurch ist es möglich, dass die Haltestangen 20 gegenüber der Arretiervorrichtung leicht in ihrer Längsrichtung, d.h. in Figur 4 und 5 senkrecht zur Zeichenebene, verschiebbar sind. Die Löseposition der Feder 30 wird ausgehend von ihrer Arretierposition erfindungsgemäß insbesondere dadurch bewirkt, dass das Schiebeelement 40 in seine in Figur 5 dargestellte zweite Position gebracht wird. Hierbei wird das Schiebeelement 40 relativ zum Trägerteil 50 ausgehend von seiner Position in Figur 4 nach links verschoben und es bewirken die Vorsprünge 42, 43 am Schiebeelement 40 zusammen mit keilartigen Betätigungsbereichen 32, 33 der Feder 30 eine Bewegung der Feder 30 in ihre Löseposition. Hierbei bewegen sich insbesondere die arretierenden Bereiche 31 der Feder 30 in eine Richtung senkrecht zur Bewegungsrichtung des Schiebeelements 40. Die Bewegung des Schiebeelements 40 findet dabei in einer Ebene parallel zur in Figur 5 senkrecht auf die Zeichenebene stehende Ebene statt, die durch die beiden Haltestangen 20 definiert wird.

Bei der alternativen Ausführungsform, bei der die Feder 30 in einem mittleren Abschnitt, der durch ein Mittelteil gebildet wird, als Kunststoffteil vorgesehen ist und wobei die Feder in ihren Endabschnitten als metallenes Endteil bzw. als eine Mehrzahl von metallenen Endteilen vorgesehen ist, ist es erfindungsgemäß insbesondere so, dass die Endteile die arretierenden Bereiche 31 bilden und dass das Mittelteil die restlichen Abschnitte der Feder 30, insbesondere die Betätigungsbereiche 32, 33, bilden.

### Bezugszeichenliste:

- 10: Kopfstütze
- 11: Material der Kopfstütze
- 15: Rahmen
- 17: Führungen
- 20: Haltestangen
- 21: unteres Teil der Haltestangen
- 22: Ausnehmungen
- 30: Federmittel
- 31: arretierende Bereiche
- 32, 33: Betätigungsbereiche
- 35: Zentralbereich
- 40: Schiebeelement
- 42 ,43: Vorsprünge
- 50: Trägerteil
- 52: Lagerpunkt
- 54: Aufnahme
- 60: Betätigungsführung
- 62: Rückstellfeder
- 64: Betätigungsknopfes
- 70: Betätigungseinrichtung

## Patentansprüche

1. Arretiervorrichtung mit einem Federmittel (30), wobei das Federmittel (30) wenigstens in eine Arretierposition einstellbar vorgesehen ist, wobei die
Arretiervorrichtung relativ zu wenigstens zwei eine Mehrzahl von Ausnehmungen (22) aufweisende Haltestangen (20) verstellbar vorgesehen ist, wobei das Federmittel (30) mit den Ausnehmungen (22) derart zusammenwirkt, dass die Einstellung des Federmittels (30) in seiner Arretierposition eine Arretierung der Arretiervorrichtung relativ zu den Haltestangen (20) bewirkt, wobei
- das Federmittel (30) vorgespannt oder nicht vorgespannt zwischen wenigstens zwei Haltestangen (20) gehalten ist,
- das Federmittel (30) zusätzlich zu seiner Arretierposition in eine Löseposition einstellbar vorgesehen ist,
- das Federmittel (30) mit den Ausnehmungen (22) derart zusammenwirken, dass es bei Einstellung des Federmittels (30) in seine Löseposition die Ausnehmungen (22) freigibt.
- die Arretiervorrichtung ein wenigstens in einer ersten Position und in einer zweiten Position einstellbares Schiebeelement (40) aufweist, wobei das Federmittel (30) mit dem Schiebeelement (40) derart zusammenwirkt, dass bei Einstellung des Schiebeelements (40) in seine erste Position das Federmittel (30) seine Arretierposition einnimmt und dass bei Einstellung des Schiebeelements (40) in seine zweite Postition das Federmittel (30) seine Löseposition einnimmt, **dadurch gekennzeichnet, dass** das Schiebeelement (40) eine Mehrzahl von Vorsprüngen (42, 43) aufweist und dass die Federmittel (30) eine Mehrzahl von Betätigungsbereichen (32, 33) aufweist, wobei durch eine Bewegung des Schiebeelements (40) parallel zu einer durch die wenigstens zwei Haltestangen (20) definierten Ebene eine hierzu im wesentlichen senkrechte Bewegung der Betätigungsbereiche (32, 33) bewirkbar ist, wobei die Betätigungsbereiche (32, 33) keilartig ausgebildet sind.

2. Arretiervorrichtung nach Anspruch 1, **dadurch gekennzeichnet, dass** das Federmittel (30) als eine einstückig vorgesehene Feder (30) vorgesehen ist.

3. Arretiervorrichtung nach einem der vorhergehenden Ansprüche, **dadurch gekennzeichnet, dass** das Federmittel (30) als eine länglich sich im wesentlichen zwischen beiden Haltestangen (20) erstreckende Feder (30) vorgesehen ist.

4. Arretiervorrichtung nach einem der vorhergehenden Ansprüche, **dadurch gekennzeichnet, dass** das Federmittel (30) wenigstens ein Mittelteil und Endteile umfasst.

5. Arretiervorrichtung nach einem der vorhergehenden Ansprüche, **dadurch gekennzeichnet, dass** das Federmittel (30) durch die Bewegung der Betätigungsbereiche (32, 33) elastisch verformt wird.

6. Arretiervorrichtung nach einem der vorhergehenden Ansprüche, **dadurch gekennzeichnet, dass** die Arretiervorrichtung einen Lagerpunkt (52) aufweist, wobei der Lagerpunkt (52) bei der Bewegung der Betätigungsbereiche (32, 33) eine Bewegung eines Zentralbereichs (35) des Federmittels (30) verhindert.

7. Kopfstütze (10) mit einer Arretiervorrichtung nach einem der vorhergehenden Ansprüche.

8. Kopfstütze (10) nach Anspruch 7, **dadurch gekennzeichnet, dass** die Kopfstütze (10) mit Haltestangen (20) zusammenwirkt, die im wesentlichen vertikal orientiert vorgesehen sind so dass die Kopfstütze (10) höhenverstellbar vorgesehen ist.

9. Verwendung einer Kopfstütze (10) bzw. einer Arretiervorrichtung nach einem der vorhergehenden Ansprüche in einem Kraftfahrzeug.

## Claims

1. Locking device with a spring means (30), the spring means (30) being provided in a manner such that it can be set at least into one locking position, the locking device being provided in a manner such that it can be adjusted relative to at least two retaining rods (20) having a plurality of recesses (22), the spring means (30) interacting with the recesses (22) in such a manner that the setting of the spring means (30) in its locking position causes the locking device to be locked relative to the retaining rods (20), wherein
- the spring means (30) is held prestressed or non-prestressed between at least two retaining rods (20),
- the spring means (30), in addition to its locking position, is provided in a manner such that it can be set into a release position,
- the spring means (30) interact with the recesses (22) in such a manner that, when the spring means (30) are set in its release position, it opens up the recesses (22),
- the locking device has a sliding element (40) which can be set at least in a first position and in a second position, the spring means (30) interacting with the sliding element (40) in such a manner that, when the sliding element (40) is set into its first position, the spring means (30) takes up its locking position and that, when the sliding element (40) is set into its second position, the spring means (30) takes up its release position,
- **characterized in that** the sliding element (40) has a plurality of projections (42, 43), and **in that** the spring means (30) have a plurality of actuating regions (32, 33), a movement of the sliding element (40) parallel to a plane defined by the at least two retaining rods (20) being able to bring about a movement of the actuating regions (32, 33) which is essentially vertical thereto, the actuating regions (32, 33) being of wedge-like design.

2. Locking device according to Claim 1, **characterized in that** the spring means (30) is provided as a spring (30) provided as a single part.

3. Locking device according to one of the preceding claims, **characterized in that** the spring means (30) is provided as a spring (30) extending in an elongate manner essentially between the two retaining rods (20).

4. Locking device according to one of the preceding claims, **characterized in that** the spring means (30) comprises at least one central part and end parts.

5. Locking device according to one of the preceding claims, **characterized in that** the spring means (30) is elastically deformed by the movement of the actuating regions (32, 33).

6. The locking device according to one of the preceding claims, **characterized in that** the locking device has a bearing point (52), the bearing point (52) preventing a movement of a central region (35) of the spring means (30) during the movement of the actuating regions (32, 33).

7. Headrest (10) with a locking device according to one of the preceding claims.

8. Headrest (10) according to Claim 7, **characterized in that** the headrest (10) interacts with retaining rods (20) which are provided in an essentially vertically oriented manner, so that the headrest (10) is provided such that it is height-adjustable.

9. Use of a headrest (10) or of a locking device according to one of the preceding claims in a motor vehicle.

## Revendications

1. Dispositif de blocage comprenant un moyen de ressort (30), le moyen de ressort (30) étant prévu de manière à pouvoir être ajusté dans au moins une position de blocage, le dispositif de blocage étant prévu de manière à pouvoir être réglé par rapport à au moins deux tiges de retenue (20) présentant une pluralité d'évidements (22), le moyen de ressort (30) coopérant avec les évidements (22) de telle sorte que l'ajustement du moyen de ressort (30) dans sa position de blocage provoque un blocage du dispositif de blocage par rapport aux tiges de retenue (20),
- le moyen de ressort (30) étant retenu avec ou sans précontrainte entre au moins deux tiges de retenue (20),
- le moyen de ressort (30) étant prévu de manière à pouvoir être ajusté dans une position de desserrage en plus de sa position de blocage,
- le moyen de ressort (30) coopérant avec les évidements (22) de telle sorte que lors de l'ajustement du moyen de ressort (30) dans sa position de desserrage, il libère les évidements (22),
- le dispositif de blocage présentant un élément coulissant (40) pouvant être ajusté au moins dans une première position et dans une deuxième position, le moyen de ressort (30) coopérant avec l'élément coulissant (40) de telle sorte que lors de l'ajustement de l'élément coulissant (40) dans sa première position, le moyen de ressort (30) adopte sa position de blocage et que lors de l'ajustement de l'élément coulissant (40) dans sa deuxième position, le moyen de ressort (30) adopte sa position de desserrage,
**caractérisé en ce que** l'élément coulissant (40) présente une pluralité de saillies (42, 43) et **en ce que** le moyen de ressort (30) présente une pluralité de régions d'actionnement (32, 33), un déplacement de l'élément coulissant (40) parallèlement à un plan défini par les au moins deux tiges de retenue (20) provoquant un mouvement des régions d'actionnement (32, 33) essentiellement perpendiculaire à celui-ci, les régions d'actionnement (32, 33) étant réalisées en forme de coin.

2. Dispositif de blocage selon la revendication 1, **caractérisé en ce que** le moyen de ressort (30) est prévu sous forme de ressort (30) réalisé d'une seule pièce.

3. Dispositif de blocage selon l'une quelconque des revendications précédentes, **caractérisé en ce que** le moyen de ressort (30) est réalisé sous la forme d'un ressort (30) s'étendant longitudinalement essentiellement entre les deux tiges de retenue (20).

4. Dispositif de blocage selon l'une quelconque des revendications précédentes, **caractérisé en ce que** le moyen de ressort (30) comporte au moins une partie centrale et des parties d'extrémité.

5. Dispositif de blocage selon l'une quelconque des revendications précédentes, **caractérisé en ce que** le moyen de ressort (30) est déformé élastiquement par le déplacement des régions d'actionnement (32, 33).

6. Dispositif de blocage selon l'une quelconque des revendications précédentes, **caractérisé en ce que** le dispositif de blocage présente un point de palier (52), le point de palier (52), lors du déplacement des régions d'actionnement (32, 33), empêchant un déplacement d'une région centrale (35) du moyen de ressort (30).

7. Appui-tête (10) comprenant un dispositif de blocage selon l'une quelconque des revendications précédentes.

8. Appui-tête (10) selon la revendication 7, **caractérisé en ce que** l'appui-tête (10) coopère avec des tiges de retenue (20) qui sont orientées essentiellement verticalement de telle sorte que l'appui-tête (10) puisse être réglé en hauteur.

9. Utilisation d'un appui-tête (10) ou d'un dispositif de blocage selon l'une quelconque des revendications précédentes dans un véhicule automobile.
